# EUROPEAN PATENT APPLICATION

(11) **EP 2 080 545 A1**
(43) Date of publication of application: **22.07.2009**
(21) Application number: 08150404.5
(22) Date of filing: 18.01.2008
(51) Int. Cl.: B01D 9/00

(54) **Method for solid liquid separation**

(71) Applicant: NIRO Process Technology B.V., 5221 EE 's-Hertogenbosch (NL)
(72) Inventor: Ruemekorf, Ray Sircy, 5241 JZ Rosmalen (NL); Schreurs, Bartelomeus Antonius, 5242 JJ Rosmalen (NL)
(74) Representative: Hatzmann, Martin

(57) **Abstract**

The invention is directed to a method and apparatus for solid liquid separation, in particular to wash columns and methods employing wash column technology for separating crystals from their slurry while simultaneously purifying the crystals.

In one aspect the invention provides a process for processing a suspension, which suspension comprises solid particles which are present in a liquid, wherein the liquid is separated from the solid particles in a wash column, wherein on the inside of said column a wash front is formed, which wash front separates an unwashed zone and a pure melt zone, characterized in that on the outside of the column at least two separate heaters are present, each of which can heat independently at least part of said unwashed zone and at least part of said pure melt zone, respectively.

In a further aspect the invention provides a wash column having at least two separate heaters on the outside.

## Description

### Background of the invention

The invention is directed to a method and apparatus for solid liquid separation, in particular to wash columns and methods employing wash column technology for separating crystals from their slurry while simultaneously purifying the crystals.

Wash columns and processes employing them are known. Wash columns are operated by feeding slurries, *viz*. suspensions of solid particles in a liquid, in particular crystals in mother liquid, to a column. These slurries may for instance be the effluents of a crystallizer. These slurries may contain solid materials which can be physically crystallized, such as organic and inorganic compounds, water included. The crystals can be the product from either melt crystallization or from solution crystallization.

US-A-2004/0 256 319 describes a process for purifying removal of crystals from their suspension in mother liquor by means of a washing column having a metal wall, which is heated at least along the length of the pure melt zone. However, the disadvantage of this and other known apparatuses and processes is that the flexibility of operation as well as the purification effect achieved by means of them can be improved.

### Summary of Invention

It is an object of the present invention to provide improved wash columns and methods for operating them. It was found that considerable improvements can be attained with respect to operation as well as purification efficiency when the washing column is heated in a plurality of zones. Furthermore, it was found that considerable improvements with respect to operation of the columns as well as purification efficiency can be attained by providing special measures for heat distribution to the washing columns.

### Brief Description of Drawings

Figure 1 shows schematic representations of three known different types of wash columns, all of which can be used in accordance with the present invention.
Figure 2 shows a schematic representation of a piston type, or mechanical wash column, in accordance with the present invention.
Figure 3 shows a cross section of a column in accordance with the present invention.
Figure 4 shows a schematic representation of a hydraulic wash column, in accordance with the present invention.

### Detailed Description

The purifying principle underlying wash column technology is that crystals have a higher purity than the liquid/solution phase. Wash columns are described in e.g. EP-A-0 398 437, EP-A-0 098 637 and EP-A-0 305 316. For melt crystallization, this is the result of the eutectic behavior of most compounds. Thus by melting the crystals and sending a portion of these molten crystals as a stream countercurrent to the moving crystal bed, in effect a purification step may be obtained. The molten product is thus used as a wash liquid to remove impurities found in the remaining liquid/solution phase. When the crystal cannot be readily converted into liquid, a separate wash liquid may be used in the same wash column apparatus.

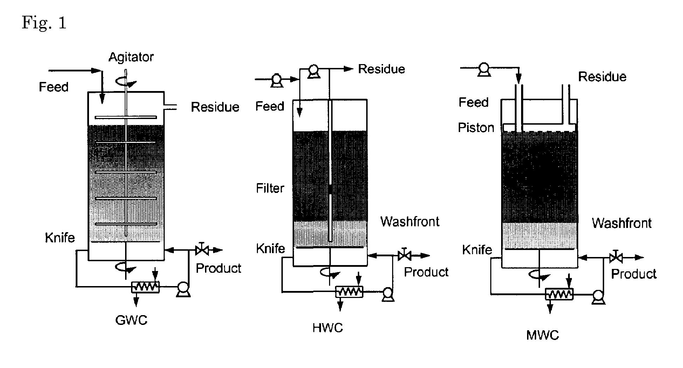

Three different types of wash column are commonly distinguished. These are gravity, hydraulic and mechanical wash columns, depending on the mechanism by which the crystals are transported through the column. These three types are schematically depicted in figure 1. All three types have in common that a crystal bed is formed along a certain height in the column. By continuously operating the wash column, or semi-continuously in case of the mechanical wash column, and by refluxing molten crystals, a wash front is formed, which usually has a thickness of several centimeters.

In the gravity wash column (GWC in figure 1) gravitational forces are responsible for the downward transport of the particles through the column. The slurry is fed at the top of the column and the crystals form a loose bed of particles. The mother liquor leaves the column via an overflow. At the bottom of the column, the crystals are molten and part of the pure melt is used as reflux, which results in the countercurrent washing action. The gravity column operates with a rather loose bed and a significant portion of this wash stream is lost by reflux out through the filtrate line.

In the hydraulic wash column (HWC in figure 1, also referred to as a forced transport wash column) the hydraulic liquid pressure drop causes transport of the crystals through the column. The feed slurry is pumped into the top of the wash column. Drag forces exerted on the mother liquid result in the crystals being transported into a packed bed zone, wherein the porosity is typically 0.3 - 0.6, which is considerably denser than the beds encountered in gravity columns, thus contributing to a more efficient operation by eliminating mixing of the wash stream and filtrate stream. The loss of product in the filtrate is practically nil. This type of column has filters positioned in filter tubes, which run parallel to the wall of the column or in the wall of the column itself. WO-A-98/27240 describes a hydraulic wash column, as well as WO-A-03/63997, which discloses a specific type of hydraulic wash column, wherein no knives for bed disintegration are required.

The mechanical wash column (MWC in figure 1) is a second type of column, based on forced transport. In this type of column a piston, screw or other type of displacement device mechanically forces the packed bed through the column. The mother liquid is allowed to leave the column via openings in the displacer, e.g. pores that are present in the piston. This type of column is particularly suitable for the treatment of slurries having a high viscosity, because the mechanical forces that can be exerted are very high. The mechanical compression provides the lowest porosity and most compact bed of the three column types. The throughput can be relatively high, like in the hydraulic wash column. Piston type wash columns are described e.g. in US-A-3 872 009 and US-A-3 777 892.

One of the problems that hamper trouble-free operation in all types of wash columns is the formation of crusts on the inside of the column. These crusts are formed by solidification of product material. In particular in hydraulic wash columns but also in mechanical wash columns the presence of crusts may give rise to plugging of the filters and general disturbance of the smooth transport of the packed crystal bed through the column. This may give undesired results during wash column operation (e.g. loss of product purity). Although in melt crystallization this undesired crust formation can be prevented or countered by applying heat on the outside or the inside of the column, it has turned out that in practice optimal heating is quite difficult to accomplish in a satisfactory manner. One of the dilemma's that is faced is that applying heat not only melts the crusts but also melts the crystals formed, thus detracting considerably from the operating efficiency of the column.

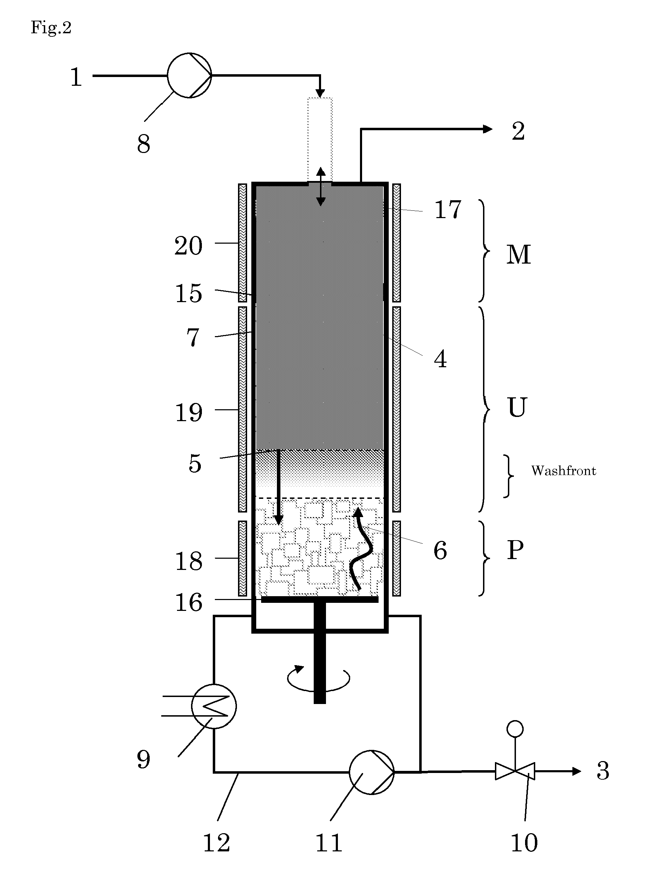

With reference to figure 2, which shows in a schematic representation a cross section of a cylindrical piston type wash column, a process according to the invention comprises feeding a slurry through line 1 by means of pump 8 to column 7. In figure 2 the feed enters the column through an opening in piston 17. Alternatively, or in addition the feed may enter the column via an opening in the side of the column (not shown). Crystals are forced downward in the direction of arrow 5, whereas filtrate flows upward in the direction of arrow 4. Different configurations wherein these two directions are reversed are also possible by reversing the movement of the piston and feeding slurry 1 from the bottom. The filtrate is allowed to leave the column through perforations 15 in piston 17. The filtrate is collected in stream 2. At the bottom of the column in figure 2, the crystal bed is scraped off by scraper 16, e.g. a rotating knife in figure 2. However, scraper-less or knife-less wash columns, e.g. those disclosed in WO-A-03/63997 are within the scope of the present invention as well. The crystals that are thus collected below rotating knife 16 are melted by applying heat through heater 9, after which the stream of molten crystals 12 is fed to pump 11. Valve 10 is used to control the flow rate of product stream 3. The remaining stream of molten crystals is recycled to the bottom of column 7. The recycle results in a purifying stream, indicated by arrow 6, which effects purification of the crystals present in the bed, which occurs in wash front W. In accordance with the present invention heating elements 18, 19 and optionally 20 are present on the outside of the column. These heating elements provide for effective heating of two or three different zones in the column. The three different zones that may be distinguished in column 7 are the piston movement zone M, unwashed/washing zone U and the completely washed or pure melt zone P.

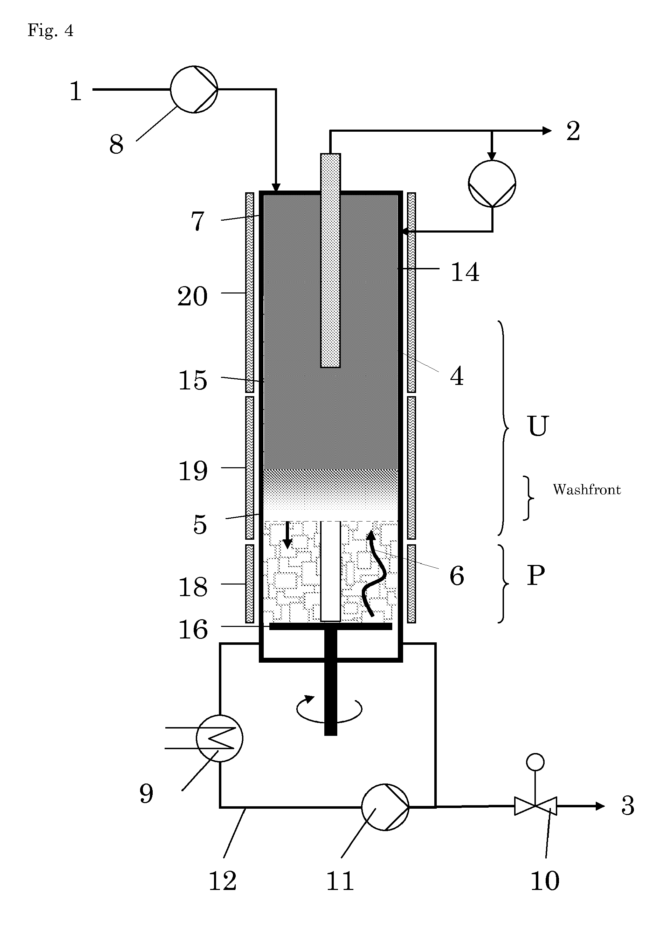

The invention can also be applied to hydraulic wash columns. Again three different zones can be distinguished. Figure 4 illustrates the three different zones that can be distinguished in hydraulic wash columns

The heaters that are employed in accordance with the present invention can be of any type known in the industry, such as heating jackets, e.g. heating jackets filled with heat transfer fluid, steam, product recirculation, hot gas (e.g. hot air) or electric tracing. Particularly suitable is electric tracing, which employs electric tracer heating cables, *viz*. electrically insulated wires of a suitable metal alloy, which can be wound spirally around the wash column, but other configurations are also possible, e.g. applied in a straight line parallel to the longest axis of the column. Common tracing equipment and arrangements are well known in the chemical industry. At least two different heating segments are envisaged in accordance with the present invention. Preferably pure melt zone P and unwashed/washing zone U are heated by the heaters. Depending on the specific melting point of the product other trace heating elements may be required. Although these are not discussed in detail, such additional heating elements are commonly known in the chemical process industry. For example, when the melting point of the specific product is above ambient conditions the process lines and equipment (e.g. lines 2, 3 and 12 of Figure 2) can be provided with heat tracing to prevent blockage of these lines.

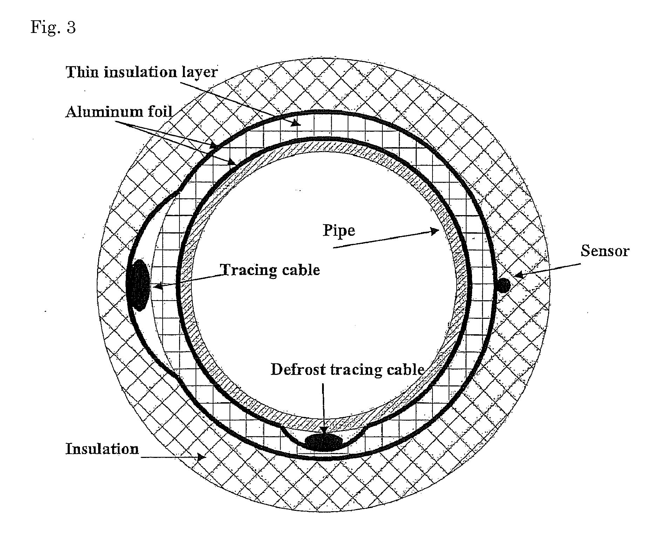

Figure 3 shows a cross section of the column in the plane perpendicular to the column's longest axis. In figure 3 a sensor is placed approximately opposite to the tracing cable or in case of spiral wound configuration the sensor is located equidistant between two adjacent cables centrally located in the specific cable run, which is a preferred embodiment, because a reliable control can be set up this way.

Preferably a thin insulation layer is present in between the wall of the column and the heaters (e.g. tracing cable). This insulation layer can be made of a material having a relatively low heat conductivity when compared to the column material. Preferably the insulation layer material has a heat conductivity of less than 1 W/(m ·K), more preferably 0.02 - 0.08 W/(m ·K). The thickness of this layer is typically from 0.1 to 2 cm, preferably 0.5 to 1 cm when using the more common insulation materials. The thin insulation layer may also be comprised of a stationary gas, in particular air.

As indicated in figure 3, thin metal foil, e.g. aluminum foil, can be used to improve the heat distribution of the electric cable type tracing systems. On the outside of the column a further insulation layer is present, to minimize heat exchange with the surroundings.

The column itself, in particular the part that conducts the crystal bed, may be constructed of metals, in particular stainless steel, as is common in process technology. Alternatively the entire column or parts of it may be constructed from any other construction material typical to the process industry (e.g. carbon steel, titanium, glass, rigid polymers (PP, PE, PEEK, PvdF, POM), aluminium or one of the wide range of metal alloys available to the process industry, or combinations of these).

In a preferred embodiment, the column is constructed of readily available steel (e.g. carbon steel, stainless steel) and coated on the inside with a durable layer of insulation material. It was found that providing a coating comprising a material such as glass, enamel or a polymeric material-in particular polytetrafluoroethene (PTFE), nylon, polypropylene (PP), polyfluoroacetate (PFA), polyvinyl chloride (PVC), polyvinylidene fluoride (PVDF), polyetheretherketone (PEEK) or combinations thereof-not only further reduces heat transfer through the circumference of the column, but also facilitates the movement of the crystal bed in the column by reducing friction and preventing formation of the previous mentioned crusts. The coating may also comprise metals, such as electropolished steel, carbon, titanium, chrome plate, hastelloy, or other specialized steels for this purpose.

In one embodiment, the heating is applied such that in effect zero or only a very small heat flux is obtained. The specific values for such a heat flux depend strongly on the heat of fusion of the specific product as products with a high heat of fusion will require respectively more heat to prevent crust formation than a product with a much lower value. The key operational concern is to minimize the amount of heat input while maintaining stability. Surprisingly although this does not result in "technical heating" (*viz*. the temperature of the contents of the column does not increase). Obtaining zero or only very small heat flux was found to be obtained most effectively by placing a temperature measurement probe on the outside of the column, rather than on the inside, in particular on a position on the column's circumference that is opposite to the corresponding heater or equidistant between two adjacent cables centrally located in the specific cable run. The heater is powered by a controller which is fed by the signal from the temperature sensor. This may be any type of control known to the skilled person, *e.g.* PID, cascade, *etc.*

The process and apparatus according to the present invention may be used to produce a variety of purified chemicals, including acrylic acid crystals from their suspension in contaminated acrylic acid melt, or an extensive list of organic and inorganic purified crystals in their contaminated suspension including benzoic acid, lactide, p-Nitrochlorobenzene, Durene (tetramethylbenzene), Caprolactam, monochloroacetic acid, o-Phenylphenol, p-dichlorobenzene, methylenediisocyanate (4,4'MDI), Phosphoric Acid (hemi-hydrate), Toluenediisocyanate (2,4 TDI), Methacrylic acid, Acrylic Acid, N-vinyl-2-pyrrolidone (NVP), p-Xylene, m-xylene, p-Chlorotoluene, 4-methylpyridine, Water, Hydrogen Peroxide, ethyl lactate, Acetonitrile which have all been purified using the process and apparatus.

The present invention will now be illustrated by the following examples.

### Example 1

In the case of phosphoric acid, the hemi-hydrate form of the crystal will melt at +29.5 °C. Since this is generally above the ambient temperature (typically around 20-25 °C), heat will flow out through the typical steel column wall. As this results in a net loss of heat at the inner wall surface, new hemi hydrate crystals will form crusts along the inner portion of the column wall. The initial test work for phosphoric acid included a piston type forced transport mechanical wash column including a stainless steel (316L) column (zone M) and a glass section installed in zones U and P. The column internal diameter was 6 cm for both the steel and glass sections. The steel column was insulated with Armaflex® closed cell foam with an outside layer of 2 cm. Electric tracing cable (Raychem type 20XTV2) was installed in section 20, as indicated in figure 2. The glass portion included a glass jacket with a 1 cm annular space where heated water could be circulated. The glass column and glass jacket allowed observation of the crystal bed inside the column during operation. The ambient temperature surrounding the wash column was between 15-20 °C during the test run. The crystallizer was operated at a temperature between 18 and 20 °C, which resulted in a slurry solid density of 30-35 wt% crystals. The slurry entered the steel portion of the wash column at the side entrance configuration. The steel cylinder (zone M of Figure 2) and the upper portion of the glass cylinder (zone U) are thus 18-20°C while the pure melt zone P and molten crystals in loop 12 were operated at 30-32 °C. When the wash column was operated without additional heating on the steel wall (section 20) or the glass cylinder (section 19) the movement of piston 17 was noticeably slower and even stopped due to the friction on the steel and glass portions. Increasing the temperature setting on the tracing cable and (section 20) and glass cylinder (sections 18 and 19) to 40°C and 36°C respectively resulted in stable bed movement and pure product.

### Example 2

As it is not feasible to use a glass column in commercial scale application of the MWC a more standard material for the chemical process industry was chosen. The column material was stainless steel (316L) with zones U and P coated in a commercially available PFA. The column was traced with separately controllable electric heating cables in zones 18, 19 and 20 as described above. The entire wash column was insulated with closed cell foam insulation of 2 cm thickness. The crystallizer was operated at temperatures between 20 - 26 °C depending on the feed composition to give a solid density of between 35 - 45 wt% crystals. The ambient temperature surrounding the wash column was between 25-30 °C. In this configuration the wash column could be operated to give stable bed transport and pure product with minimal tracing heat input. Since the bed could not be observed through the steel cylinder, bed movement was recorded through the piston movement. The piston could be manually observed at the column or through the position sensor transmitter installed on this unit. Purity measurement was completed by collecting periodic samples from the operating wash column.

In contrast to the lab tests in Example 1, the tracing temperatures of the coated steel wall were much lower. Zone 20 was typically in the range of 26-27 °C and zone 19 only 29-30 °C. Operation without any heat tracing resulted in a slight decrease in stability (less stable piston movement) but did not result in blockage or complete stop of the piston movement.

## Claims

1. Process for processing a suspension, which suspension comprises solid particles which are present in a liquid, wherein the liquid is separated from the solid particles in a wash column, wherein on the inside of said column a wash front is formed, which wash front separates an unwashed zone and a pure melt zone, **characterized in that** on the outside of the column at least two separate heaters are present, each of which can heat independently at least part of said unwashed zone and at least part of said pure melt zone, respectively.

2. Process according to claim 1, wherein in said wash column is a piston type column in which at least three different zones are present:
a. a piston movement zone M, which is delimited by one distal end of said column and by the plane that runs parallel to the surface of said piston when in its lowest position;
b. an unwashed/washing zone U, which is delimited by zone M and said wash front; and
c. a pure melt zone P, which is delimited by said wash front and the other distal end of said column;
wherein at least zone P and zone U are heated and optionally zone M is heated.

3. Process according to any of the previous claims, wherein at least one of said heaters, preferably at least two of said heaters, comprises electric tracer heating cables.

4. Process according to any of the previous claims, wherein said column comprises on at least part of its outside surface an insulation layer, which is present in between the wall of the column and the heaters, which insulation layer comprises a material having a heat conductivity that is lower than that of the column material.

5. Process according to claim 4, wherein said heat conductivity of the insulation layer material is less than 1 W/(m · K), preferably 0.02 - 0.08 W/(m· K).

6. Process according to claim 4 or 5, wherein the thickness of said insulation layer is from 0.1 to 2 cm, preferably 0.5 to 1 cm.

7. Process according to any of the previous claims, wherein said heaters powered via a control loop, wherein the control is fed by an input signal from a temperature sensor, which temperature sensor is located on the outside of said column.

8. Process according to any of the previous claims, wherein said column is coated on the inside with a coating comprising a glass, a metal or a polymeric material

9. Process according to any of the previous claims, wherein said column is coated on the inside with a coating comprising polytetrafluoroethene (PTFE), nylon, polypropylene (PP), polyfluoroacetate (PFA), polyvinyl chloride (PVC), polyvinylidene fluoride (PVDF) or polyetheretherketone (PEEK), or combinations thereof.
